(19) Europäisches Patentamt
European Patent Office
Office européen des brevets

(11) Veröffentlichungsnummer: **0 337 050**
**A1**

# (12) EUROPÄISCHE PATENTANMELDUNG

(21) Anmeldenummer: **89100211.5**

(51) Int. Cl.[4]: **B01J 49/00 , C02F 1/42**

(22) Anmeldetag: **07.01.89**

(30) Priorität: **11.03.88 DE 3808043**

(43) Veröffentlichungstag der Anmeldung:
**18.10.89 Patentblatt 89/42**

(84) Benannte Vertragsstaaten:
**DE FR IT**

(71) Anmelder: **CILLIT WASSERTECHNIK GMBH & CO.**
**Industriestrasse**
**D-6905 Schriesheim(DE)**

(72) Erfinder: **Nestler, Volker, Dr.**
**Berlichingenstrasse 61**
**D-7119 Niedernhall(DE)**
Erfinder: **Zucholl, Klaus, Dr.**
**Niederfeldstrasse 123**
**D-6800 Mannheim 1(DE)**

(74) Vertreter: **Wolf, Eckhard, Dr.-Ing.**
**Eugensplatz 5 Postfach 13 10 01**
**D-7000 Stuttgart 1(DE)**

## (54) Verfahren und Vorrichtung zur Teil- oder Vollentsalzung von Wasser.

(57) Das erfindungsgemäße Verfahren ist zur Teil- oder Vollentsalzung oder Entcarbonisierung von Wasser mittels mindestens eines Ionenaustauschers und zur elektrolytischen Regeneration des Austauschermaterials bestimmt. In der Regenerationsphase wird das Austauschermaterial einem einen Elektrolysestrom erzeugenden elektrischen Feld ausgesetzt, wobei die aus dem Austauschermaterial freigesetzten Ionen in einen Spülwasserstrom gelangen. Als Elektrolyt und Spülflüssigkeit wird Wasser verwendet. Die das Austauschermaterial und das Spülwasser aufnehmenden Bereiche sind durch eine parallel zur Strömungsrichtung ausgerichtete flüssigkeitsdurchlässige Leitwand voneinander getrennt. In der Betriebsphase wird Wasser durch den Ionenaustauscher geleitet und das Spülwasser stationär gehalten, während in der Regenerationsphase Wasser durch den Spülwasserbereich geleitet und das Wasser im Bereich des Ionenaustauscher stationär gehalten wird. Das in der Regenerationsphase vorhandene elektrische Feld durchdringt die Ionenaustauscher- und Spülwasserbereiche unter Bildung einer gemeinsamen Elektrolysezelle, wobei die Feldlinien im wesentlichen senkrecht durch die Leitwand hindurchgreifen.

EP 0 337 050 A1

## Verfahren und Vorrichtung zur Teil- oder Vollentsalzung von Wasser

Die Erfindung betrifft ein Verfahren und eine Vorrichtung zur Teil- oder Vollentsalzung oder Entcarbonisierung von Wasser mittels mindestens eines Ionenaustauschers und zur elektrolytischen Regeneration des Austauschermaterials der im Oberbegriff der Ansprüche 1 bzw. 9 angegebenen Gattung.

Es ist bekannt, Kationenaustauscher durch Behandlung mit Säuren und Anionenaustauscher durch Behandlung mit Basen zu regenerieren und dabei die durch Metallkationen oder durch anionische Säurereste ausgetauschten Plätze des Ionenaustauschers wieder mit Wasserstoffkationen bzw. Hydroxylanionen zu besetzen. Eine annähernd vollständige Regenerierung des Ionenaustauschers ist jedoch nur dann zu erreichen, wenn man mit einem Vielfachen der stöchiometrischen, für den Austausch tatsächlich erforderlichen Säure- oder Basenmenge arbeitet, so daß große Mengen stark verdünnter wässriger Lösungen anfallen, deren Aufarbeitung unwirtschaftlich ist.

Um diesen Nachteil zu vermeiden, ist es bereits vorgeschlagen worden (DE-PS 26 016 120), daß der mit Ionen beladene Ionenaustauscher zur Abscheidung oder Zersetzung dieser Ionen in Kontakt mit einer wässrigen Lösung elektrolysiert oder galvanisiert wird. Als wässrige Lösung wird dort die stöchiometrisch für die Besetzung aller austauschbaren Plätze des Ionenaustauschers erforderliche Menge an wässriger Säure- und Basenlösung verwendet. Die durch die elektrolytische Regeneration freigesetzten Ionen gelangen dabei in die im folgenden als Spulflüssigkeit bezeichnete Lösung und führen dort oder an der benachbarten Elektrode Sekundärreaktionen aus, die je nach Konsistenz der entstehenden chemischen Verbindungen zu einem Niederschlag, einer Lösung im Lösungsmittel oder zu einer Verflüchtigung führen. Bei dieser Methode wird als nachteilig empfunden, daß in der Regenerationsphase die Regenerationsflüssigkeit unter Verdrängung des noch vorhandenen Wassers unmittelbar durch das Ionenaustauscherbett geleitet werden muß und daß als Regenerationsflüssigkeit je nach Art des Ionenaustauschers eine Säure oder Base zu verwenden ist. Im Anschluß an den Regenerierungsvorgang muß dann zunächst die Regenerationsflüssigkeit mit Wasser aus dem Ionenaustauscher verdrängt werden.

Der Erfindung liegt demgegenüber die Aufgabe zugrunde, ein Verfahren zur Teil- oder Vollentsalzung oder zur Entcarbonisierung von Wasser sowie zur elektrolytischen Regeneration des Austauschermaterials zu entwickeln, das eine einfache Umschaltung zwischen Betriebsphase und Regenerationsphase gewährleistet und bei welchem die Verwendung einer Säure oder Base als Regenerationsflüssigkeit entbehrlich ist. Eine weitere Aufgabe besteht in der Schaffung einer vorteilhaften Vorrichtung zur Durchführung des erfindungsgemäßen Verfahrens.

Diese Aufgabe wird mit den in den Patentansprüchen 1 bzw. 9 angegebenen Merkmalskombinationen gelöst. Weite re vorteilhafte Ausgestaltungen und Weiterbildungen der Erfindung ergeben sich aus den Unteransprüchen.

Die erfindungsgemäße Lösung besteht im wesentlichen darin, daß als Regenerationsflüssigkeit und Elektrolyt Wasser verwendet wird, daß der das Austauschermaterial aufnehmende Bereich und ein Spülwasserbereich durch eine parallel zur Strömungsrichtung des Wassers ausgerichtete, flüssigkeits- und ionendurchlässige Leitwand voneinander getrennt sind, daß in der Betriebsphase Wasser durch den Ionenaustauscher geleitet und das Spülwasser stationär gehalten wird, daß in der Regenerationsphase Wasser durch den Spülwasserbereich geleitet und das Wasser im Bereich des Ionenaustauschers stationär gehalten wird und daß das in der Regenerationsphase vorhandene elektrische Feld die Ionenaustauscher- und Spülwasserbereiche unter Bildung einer gemeinsamen Elektrolysezelle durch die Leitwand hindurch im wesentlichen senkrecht zur Leitwandfläche und zur Strömungsrichtung des Wassers durchdringt.

Gemäß einer vorteilhaften Ausgestaltung der Erfindung wird das elektrische Feld durch je eine im Ionenaustauscherbereich und im Spülwasserbereich angeordnete Elektrode aufgebaut. Im Falle eines Kationenaustauschers ist die Elektrode im Ionenaustauscherbereich als Anode und die Elektrode im Spülwasserbereich als Kathode geschaltet, während im Falle eines Anionenaustauschers die Kathode im Ionenaustauscherbereich und die Anode im Spülwasserbereich angeordnet ist. Wegen des geringen Dissoziationsgrades von Wasser und zur Vermeidung übermäßiger ohmscher Verluste sollten die Elektrodenabstände relativ klein gewählt werden. Um dennoch einen ausreichenden Wasserdurchsatz zu erhal ten, wird gemäß einer weiteren vorteilhaften Ausgestaltung der Erfindung vorgeschlagen, daß mehrere aus Ionenaustauscherbereich und Spülflüssigkeitsbereich bestehende Elektrolysezellen parallel zueinander von dem Wasser bzw. Spülwasser durchströmt werden. Die parallel geschalteten Ionenaustauscherbereiche enthalten dabei zweckmäßig das gleiche Ionenaustauschermaterial und bilden entweder einen Kationen- oder eine Anionenaustauscher. Um eine Vollentsalzung zu erzielen, können zwei aus mindestens einem Ionenaustauscherbereich und einem Spülwasserbereich bestehende Zellen, von denen die eine einen Anionenaustauscher und die andere einen Kationenaustauscher enthält, hintereinandergeschaltet werden.

Um ein nachträgliches Verschneiden des entsalzten Wassers zu vermeiden, kann es auch von Vorteil sein, wenn in einer Austauschersäule ein Anionenaustauscher und ein Kationenaustauscher in zwei durch eine flüssigkeits- und ionendurchlässige Leitwand voneinander getrennten Bereichen angeordnet sind und nach außen hin über je eine weitere Leitwand an je einen Spülwasserbereich anschließen, wobei das in der Regenerationsphase vorhandene elektrische Feld die genannten Bereiche durch die Leitwände hindurch unter Bildung einer gemeinsamen Elektrolysezelle durchsetzt und die vor der Zelle in die beiden Ionenaustauscherbereiche bzw. Spülwasserbereiche aufgeteilten Wasserströme hinter der Zelle wieder zusammengeführt werden.

Zur Erhöhung der Ionenbeweglichkeit in der wässrigen Lösung kann dem elektrischen Gleichfeld ein hochfrequentes Wechselfeld überlagert werden.

Nach einer weiteren bevorzugten Ausgestaltung der Erfindung ist die an ihrer Oberfläche parallel ange strömte Leitwand mit wasserdurchlässigen Öffnungen versehen, deren Durchmesser kleiner als ihre Länge ist, so daß eine Durchmischung zwischen der strömenden Flüssigkeit auf der einen und der stationären Flüssigkeit auf der anderen Seite der Leitwand weitgehend vermieden wird und unter der Einwirkung des elektrischen Feldes in der Regenerationsphase dennoch ein nahezu ungehinderter Ionendurchtritt gewährleistet ist. Vorteilhafterweise ist die Leitwand als poröses Filterelement, als poröse Keramik- oder Glasplatte oder als Wabenstruktur ausgebildet, wobei der Quotient aus Länge und Durchmesser der Poren oder Waben größer als 4, vorzugsweise größer als 10 sein sollte.

Zur Reinigung der Leitwand und des Austauschermaterials wird sowohl der Austauscherbereich als auch der Spülwasserbereich mit Reinigungsflüssigkeit, vorzugsweise Wasser, beaufschlagt, so daß die Reinigungsflüssigkeit durch die Öffnungen in der Leitwand hindurchtreten kann.

Zweckmäßig ist die Austauschersäule als Zylinderrohr ausgebildet, das durch die zylindrisch ausgebildete Leitwand in zwei zueinander konzentrische Zonen unterteilt ist. Die mit je einem absperrbaren Wassereinlaß und Wasserauslaß versehene zylindrische Innenzone enthält dabei das Ionenaustauschermaterial und ist von einer Stabelektrode axial durchsetzt, während die mit je einem weiteren absperrbaren Wassereinlaß und Wasserauslaß versehene ringförmige Außenzone mit dem Spülwasser beaufschlagbar ist und mit mindestens einer in der Nähe der Außenwand angeordneten oder durch die Außenwand gebildeten achsparallelen Elektrode versehen ist.

Grundsätzlich ist es jedoch auch möglich, ein durch mindestens eine ebene Leitwand in die verschiedenen Zonen unterteiltes Rechteckrohr zu verwenden. Dabei können in einer Säule mehrere parallel durchströmte und elektrisch parallel geschaltete, aus Ionenaustauscher- und Spülwasserzone bestehende Elektrolysezellen angeordnet sein.

Im folgenden wird die Erfindung anhand einiger in der Zeichnung in schematischer Weise dargestellter Ausführungsbeispiele näher erläutert. Es zeigen:

Fig. 1 einen Schnitt durch eine elektrolytisch regenerierbare Ionenaustauschersäule;

Fig. 2 ein Schema zweier hintereinandergeschalteter, elektrolytisch regenerierbarer Austauschersäulen zur Vollentsalzung;

Fig. 3 einen Schnitt durch eine elektrolytisch regenerierbare Ionenaustauschersäule mit 2 ebenen Leitwänden;

Fig. 4a und 4b eine ausschnittsweise Schnittdarstellung eines Kationenaustauschers und eines Anionenaustauschers mit mehreren parallel durchströmten Austauscher- und Spülwasserzonen;

Fig. 5 einen Schnitt durch eine elektrolytisch regenerierbare Austauschersäule mit parallel durchströmten Anionen- und Kationenaustauschern zur Teilentsalzung.

Die in Fig. 1 gezeigte Ionenaustauschersäule besteht im wesentlichen aus einem zylindrischen Rohr 10, das durch eine zum Rohr 10 koaxiale, flüssigkeits- und ionendurchlässige Leitwand 12 in eine innere, mit körnigem Ionenaustauschermaterial 14 gefüllte zylindrische Innenzone 16 und eine äußere Ringzone 18 unterteilt ist. Die Austauscherzone 16 ist bei geöffnetem Einlaßventil 20 über den Einlaßstutzen 22 mit Hartwasser beaufschlagbar. Das in Kontakt mit dem Austauschermaterial 14 enthärtete Wasser gelangt über den Auslaßstutzen 24 bei geöffnetem Auslaßventil 26 zum Verbraucher. Die außen liegende Ringzone 18 ist dagegen bei geöffnetem Einlaßventil 28 über den Einlaßstutzen 30 mit Spülwasser beaufschlagbar, das über den Auslaßstutzen 32 und das Auslaßventil 34 weggeleitet wird. Die Austauscherzone 16 wird axial von einer Stabelektrode 36 durchsetzt, die an isolierten Elektrodenhaltern 38 in ihrer Lage innerhalb des Gehäuses festgehalten wird. Als Gegenelektrode 40 fungiert die metallisierte Außenwand des Ringraums 18. Die Elektroden 36, 40 sind mit einer Gleichspannungsquelle 42 verbindbar. Im Falle des in Fig. 1 gezeigten Ausführungsbeispiels ist die Stabelektrode 36 als Anode und die Außenelektrode 40 als Kathode schaltbar. Diese Schaltung gilt für den Fall eines Kationenaustauschers 14. Im Falle eines Anionenaustauschers 14 sind die Elektroden 36, 40 umzupolen.

Während der Betriebsphase wird das zu entsalzende bzw. enthärtende Wasser bei offenen Ventilen 20 und 26 durch die Austauscherzone 16 geleitet, während das Spülwasser in der Außenzone 18 bei geschlossenen Ventilen 28 und 34 stationär ist. Die als Filterelement ausgebildete und daher an sich flüssigkeitsdurchlässige Leitwand 12 wird von dem durch den Ionenaustauscher strömenden Wasser parallel angeströmt. Die Leitwandöffnungen sind dabei so ausgebildet, daß eine Durchmischung mit dem stationären Spülwasser in der Ringkammer 18 vermieden wird. In der Betriebsphase sind die Elektroden 36, 40 von der Spannungsquelle 42 abgeklemmt. Von Zeit zu Zeit muß das Ionenaustauschermaterial 14 regeneriert werden, wobei die zuvor von dem Hartwasser aufgenommenen Ionen je nach Polarität durch Wasserstoff bzw. Hydroxylionen ersetzt werden. In der Regenerationsphase werden die Ventile 20 und 26 geschlossen, so daß die in der Austauscherzone 16 befindliche Flüssigkeit stationär ist. Gleichzeitig werden die Ventile 28 und 34 für den Durchtritt von Spülwasser geöffnet. Wenn nun zwischen den Elektroden 36 und 40 über die Spannungsquelle 42 eine Gleichspannung angelegt wird, so baut sich zwischen diesen Elektroden ein elektrisches Gleichfeld auf, dessen Feldlinien senkrecht zur Leitwandfläche 12 und zur Stömungsrichtung in der Spülwasserzone 18 verlaufen. Der zwischen den Elektroden angeordnete, mit dem Ionenaustauscher 16 und mit Wasser ausgefüllte Raum bildet dabei eine Elektrolysezelle, in der je nach Polarität der angelegten Spannung und nach Art des verwendeten Ionenaustauschermaterials unterschiedliche Elektrolysevorgänge ablaufen.

Nach dem Regenerationsvorgang können das Austauschermaterial und die Leitwand bei abgeschaltetem Feld mit Reinigungswasser gereinigt werden, indem die Ventile 20 und 34 geöffnet und die Ventile 28 und 26 geschlossen werden.

Bei dem in Fig. 2 in einem schematischen Schaltschema dargestellten Ausführungsbeispiel sind zwei elektroly tisch regenerierbare Austauschersäulen 1 und 2 vorgesehen, von denen die Säule 1 im Raum 16 ein Kationenaustauschermaterial und die Säule 2 im Raum 16′, ein Anionenaustauschermaterial enthält. Die hintereinandergeschalteten Austauschersäulen 1 und 2 werden in der Betriebsphase bei geöffneten Ventilen 20, 26, 20′, 26′ mit Hartwasser beaufschlagt, das an der Austrittstelle 26′ als vollentsalztes Reinwasser austritt. Während der Betriebsphase sind die Ventile 28, 34, 28′ und 34′ geschlossen, so daß das Spülwasser in den Ringräumen 18, 18′ stationär ist. Durch die Leitwände 12, 12′ findet in der Betriebsphase im feldfreien Zustand kein Wasser- und Ionenaustausch mit dem Spülwasser statt. In der Regenerationsphase werden die Ventile 20, 26, 20′ und 26′ geschlossen, während die Ventile 28, 34, 28′ und 34′ für den Durchtritt von Spülwasser geöffnet werden. Gleichzeitig werden an die Elektroden der Austauschersäulen die in Fig. 2 symbolisch angedeuteten Potentiale angelegt.

Bei dem Ausführungsbeispiel nach Fig. 3 sind in einer als Rechteckrohr ausgebildeten Austauschersäule 3 ingesamt drei Bereiche 16, 18 und 18′ durch Leitwände 12, 12′ voneinander getrennt. Der Innenbereich 16 ist mit einem Kationenaustauscher oder einem Anionenaustauscher gefüllt, während die Außenbereiche 18 und 18′ mit Spülwasser beaufschlagbar sind. In der Betriebsphase wird die Austauscherzone 16 über ein Einlaßventil mit Hartwasser beaufschlagt, während das teilentsalzte Wasser am Ventil 26 austritt. Gleichzeitig sind die Ventile 28 und 34 geschlossen, so daß das Wasser in den Zonen 18, 18′ stationär ist. In der Regenerationsphase werden dagegen die Ventile 20 und 26 geschlossen und die Ventile 28 und 34 für den Durchtritt von Spül wasser geöffnet. Gleichzeitig wird zwischen den Außenelektroden 40, 40′ die in Fig. 3 symbolisch angedeutete Spannung angelegt. Die Elektrode 40 ist dabei als Kathode und die Elektrode 40′ als Anode geschaltet.

Das Ausführungsbeispiel nach Fig. 5 unterscheidet sich von dem nach Fig. 3 dadurch, daß der Austauscherbereich durch eine weitere Leitwand 50 in zwei Zonen 16, 16′ unterteilt ist, von denen die Zone 16 mit einem Kationenaustauscher und die Zone 16′ mit einem Anionenaustauscher gefüllt ist. In der Betriebsphase werden die Austauscherzonen 16, 16′ über ein gemeinsames Einlaßventil 20 mit Hartwasser beaufschlagt, während das verschnittene teilentsalzte Wasser am gemeinsamen Ventil 26 austritt.

In den Ausführungsbeispielen nach Fig. 4a und 4b sind eine Kationenaustauschersäule bzw. eine Anionenaustauschersäule ausschnittsweise dargestellt, in denen mehrere parallel durchströmte Austauscherzonen 16 bzw. 16′ und Spülwasserzonen 18 bzw. 18′ vorgesehen sind. Diese Zonen sind durch ionen- und wasserdurchlässige Leitwände 12, 12′ voneinander getrennt. Sie bilden mehrere parallelgeschaltete Elektrolysezellen, die in der Regenerationsphase in der angedeuteten Polung innerhalb der einzelnen Säulen mit parallelgeschalteten Gleichspannungen beaufschlagt werden.

Zur Erhöhung der Ionenbeweglichkeit können bei allen beschriebenen Ausführungsbeispielen die elektrischen Gleichfelder mit einem hochfrequenten Wechselfeld überlagert werden.

Im folgenden werden als Beispiel die Elektrolytreaktionen von Calciumhydrocarbonat $Ca(HCO_3)_2$ bei der Regeneration sowohl eines Kationenaustauschers als auch eines Anionenaustauschers beschrieben. Beim

Kationenaustauscher ist die Stabelektrode 36 als Anode und die Außenelektrode 40 als Kathode ausgebildet.

Die Reaktionen im Anodenraum (Raum 16) sind dabei wie folgt:

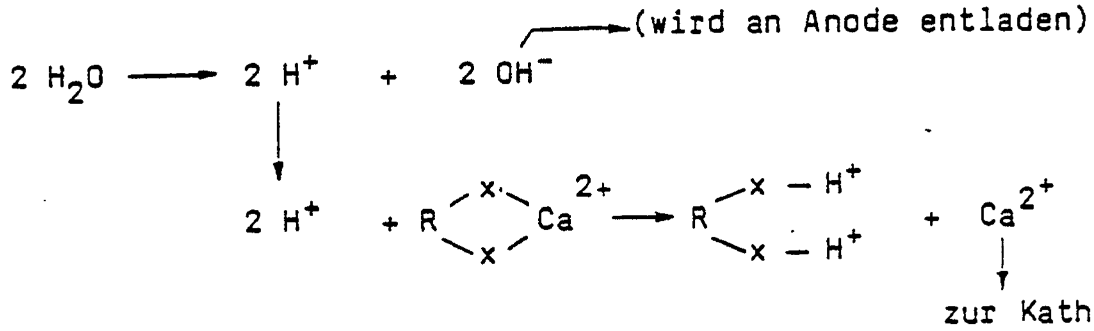


(1)

Wegen des Überschusses an Wasserstoffionen im Anodenraum sinkt der pH-Wert auf etwa 2. Daher bildet sich dort kein $Ca(OH)_2$.

Im Bereich der Kathode, also im Spülwasserraum 18, laufen folgende Reaktionen ab:

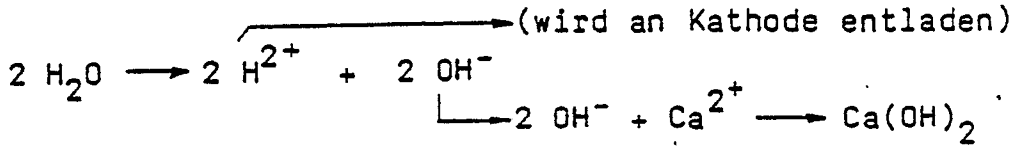


(2)

Aufgrund des dort entstehenden $Ca(OH)_2$ steigt der pH-Wert im Kathodenraum auf etwa 11 an.

Aus den Reaktionsgleichungen 1 und 2 ergibt sich, daß zur Verdrängung und Beseitigung eines zweiwertigen Calcium-Kations insgesamt vier Wassermoleküle benötigt werden.

Während der Betriebsphase, in der die Elektrolysenspannung Null ist, werden die Wasserstoffionen des Kationenaustauschers nach folgender Reaktionsgleichung durch Calciumionen ausgetauscht:

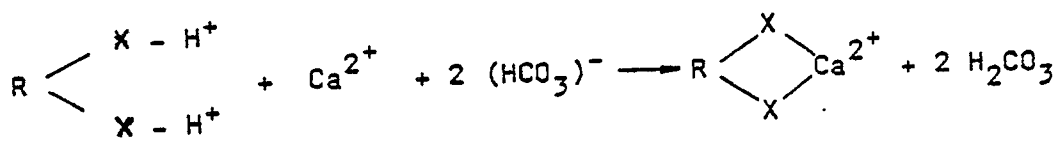

(3)

Im Falle der Verwendung eines Anionenaustauschers, bei welchem in der Regenerationsphase die Stabelektrode 36 als Kathode und die Außenelektrode 40 als Anode geschaltet ist, ergeben sich bei dem beschriebenen Beispiel im Kathodenraum (Harzraum 16) folgende Reaktionen:

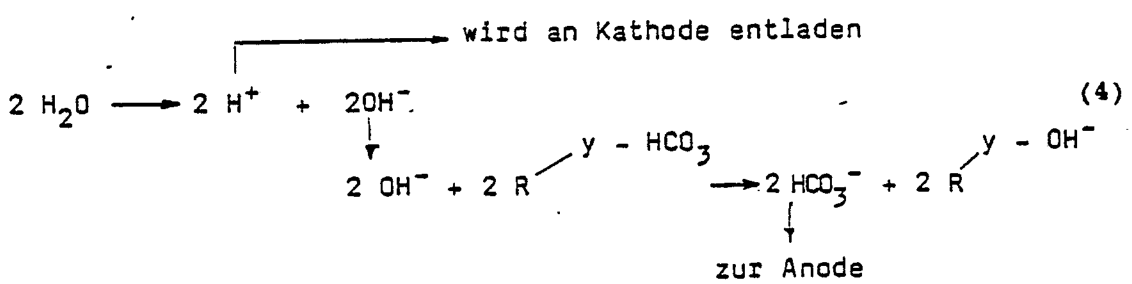


(4)

während sich im Anodenraum (Spülwasserbereich 18) folgende Reaktionen abspielen:

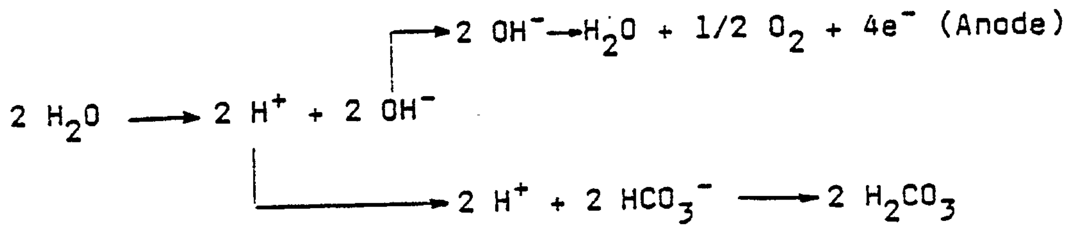

(5)

In der Betriebsphase, in der der Ionenaustauscher bei stationärem Spülwasserkreislauf mit Hartwasser beaufschlagt wird, werden die am Ionenaustauscher angelagerten Hydroxylionen wie folgt durch Hydrocarbonat-Ionen ersetzt:

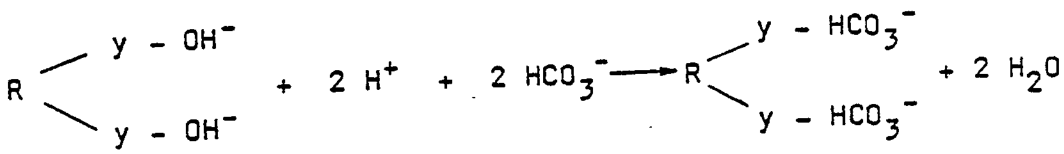

(6)

Wird nun, wie im folgenden beschrieben, ein kombinierter Kationen- und Anionenaustauscher verwendet, so ergeben sich in der Summenbetrachtung bei der elektrolytischen Regeneration folgende Reaktionen

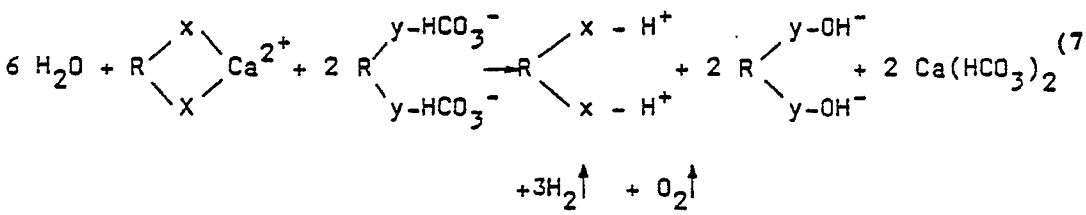

(7)

Der Ionenaustausch in der Betriebsphase läuft beim kombinierten Anionen-Kationenaustauscher nach folgenden Reaktionsgleichungen ab:

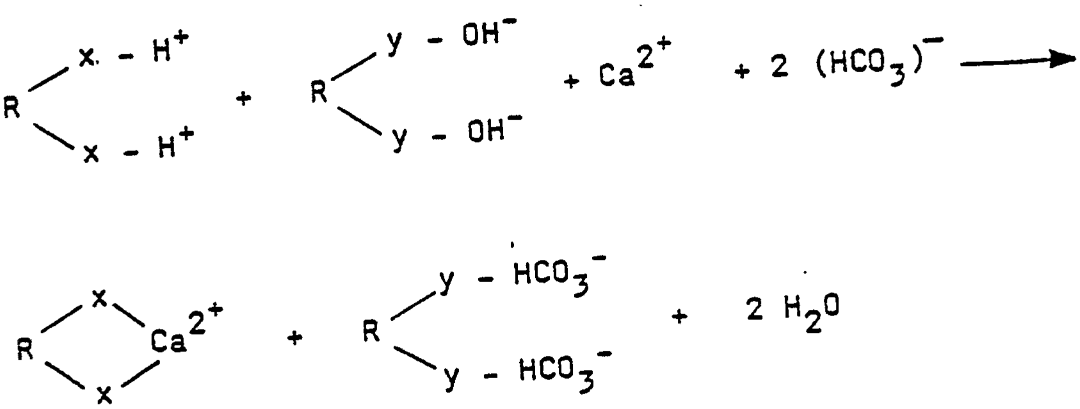

(8)

Die vorstehenden Betrachtungen gelten ausschließlich für den Ionenaustausch von Calciumhydrocarbonat. für andere Wasserinhaltsstoffe, wie z. B. NaCl gelten ähnliche Betrachtungen. Sie ändern jedenfalls nichts an den grundsätzlichen Überlegungen der beschriebenen elektrolytischen Regeneration.

**Ansprüche**

1. Verfahren zur Teil- oder Vollentsalzung oder Entcarbonisierung von Wasser mittels mindestens eines Ionenaustauschers und zur elektrolytischen Regeneration des Austauschermaterials, bei welchem das Austauschermaterial in der Betriebsphase in elektrisch feldfreiem Raum von dem zu entsalzenden Wasser duchströmt wird und in der Regenerationsphase einem den Elektrolysestrom erzeugenden Feld ausgesetzt

wird, wobei im Zuge des elektrolytischen Regenerationsvorgangs aus dem Austauschermaterial freigesetzte Ionen zumindest teilweise in eine Regenerationsflüssigkeit gelangen, dadurch gekennzeichnet, daß als Regenerationsflüssigkeit und Elektrolyt Wasser verwendet wird, daß der das Austauschermaterial aufnehmende Bereich und mindestens ein Spülwasserbereich durch mindestens eine parallel zur Strömungsrichtung des Wassers ausgerichtete flüssigkeits- und ionendurchlässige Leitwand voneinander getrennt sind, daß in der Betriebsphase Wasser durch den Ionenaustauscher geleitet und das Wasser im Spülwasserbereich stationär gehalten wird, daß in der Regenerationsphase Wasser durch den Spülwasserbereich geleitet und das Wasser im Bereich des Ionenaustauschers stationär gehalten wird und daß das in der Regenerationsphase vorhandene elektrische Feld die Ionenaustauscher- und Spülwasserbereiche unter Bildung einer gemeinsamen Elektrolysezelle durch die Leitwand hindurch im wesentlichen senkrecht zur Leitwandfläche und zur Strömungsrichtung des Wassers durchdringt.

2. Verfahren nach Anspruch 1, dadurch gekennzeichnet, daß das elektrische Feld zwischen zwei Elektroden aufgebaut wird, von denen eine im Ionenaustauscherbereich und die andere im Spülwasserbereich angeordnet ist.

3. Verfahren nach Anspruch 2, dadurch gekennzeichnet, daß im Falle eines Kationenaustauschers die Elektrode im Ionenaustauscherbereich als Anode und die Elektrode im Spülwasserbereich als Kathode geschaltet wird.

4. Verfahren nach Anspruch 2, dadurch gekennzeichnet, daß im Falle eines Anionenaustauschers die Elektrode im Ionenaustauscherbereich als Kathode und die Elektrode im Spülwasserbereich als Anode geschaltet wird.

5. Verfahren nach einem der Ansprüche 1 bis 4, dadurch gekennzeichnet, daß mehrere aus Ionenaustauscherbereich und Spülwasserbereich bestehende Elektrolysezellen parallel zueinander von Wasser bzw. Spülwasser durchstömt werden.

6. Verfahren nach Anspruch 1, dadurch gekennzeichnet, daß der das Austauschermaterial aufnehmende Bereich nach zwei Seiten hin über je eine flüssigkeitsdurchlässige Leitwand an je einen Spülwasserbereich anschließt und daß das in der Regenerati onsphase vorhandene elektrische Feld die genannten Bereiche durch die Leitwände hindurch unter Bildung einer gemeinsamen Elektrolysezelle im wesentlichen senkrecht zu den Leitwandflächen und zur Strömungsrichtung des Wassers durchsetzt.

7. Verfahren nach Anspruch 6, dadurch gekennzeichnet, daß die vor der Elektrolysezelle in die beiden Spülwasserbereiche aufgeteilten Spülwasserströme hinter der Zelle wieder zusammengeführt werden.

8. Verfahren nach Anspruch 1, dadurch gekennzeichnet, daß ein Anionenaustauscher und ein Kationenaustauscher in zwei durch eine Leitwand voneinander getrennten Bereichen nach außen hin über je eine weitere Leitwand an je einen Spülwasserbereich anschließen, daß das in der Regenerationsphase vorhandene elektrische Feld die genannten Bereiche durch die Leitwände hindurch unter Bildung einer gemeinsamen Elektrolysezelle im wesentlichen senkrecht zu den Leitwandflächen und zur Strömungsrichtung des Wassers durchsetzt, und daß die vor der Elektrolysezelle in die beiden Ionenaustauscherbereiche bzw. Spülwasserbereiche aufgeteilten Wasserströme hinter der Zelle wieder zusammengeführt werden.

9. Verfahren nach einem der Ansprüche 1 bis 8, dadurch gekennzeichnet, daß dem elektrischen Gleichfeld ein hochfrequentes Wechselfeld überlagert wird.

10. Verfahren nach einem der Ansprüche 1 bis 9, dadurch gekennzeichnet, daß zwei aus mindestens einem Ionenaustauscherbereich und einem Spülwasserbereich bestehende Elektrolysezellen, von denen die eine einen Anionenaustauscher und die andere einen Kationenaustauscher enthält, hintereinander von dem zu entsalzenden Wasser bzw. dem Spülwasser durchströmt werden und daß die in der Regenerationsphase vorhandenen elektrischen Felder in den beiden Elektrolysezellen entgegengesetzt gepolt sind.

11. Verfahren nach einem der Ansprüche 1 bis 10, dadurch gekennzeichnet, daß zur Reinigung von Ionenaustauschermaterial und Leitwand Ionenaustauscher- und Spülwasserbereiche bei abgeschaltetem elektrischen Feld durch die Leitwand hindurch mit Reinigungsflüssigkeit, vorzugsweise Wasser, durchströmt werden.

12. Vorrichtung zur Teil- oder Vollentsalzung oder Entcarbonisierung von Wasser mittels mindestens eines Ionenaustauschers und zur elektrolytischen Regeneration des Austauschermaterials mit mindestens zwei im Abstand voneinander angeordneten, das Austauschermaterial zwischen sich aufnehmenden, in der Regenerationsphase mit einer elektrischen Spannung beaufschlagten Elektroden und mit einem Spülflüssigkeitsstrom zur Aufnahme der im Zuge des elektrolytischen Regenerationsvorgang aus dem Ionenaustauscher freigesetzten Ionen, gekennzeichnet durch eine Säule (1, 2, 3) aus mindestens zwei getrennt von Wasser durchströmbaren, durch mindestens eine parallel zur Strömungsrichtung des Wassers ausgerichtete flüssigkeits-und ionendurchlässige Leitwand (12, 12′) voneinan der getrennten, im Elektrodenzwischenraum angeordneten und in der Regenerationsphase eine gemeinsame Elektrolysezelle bildenden Zonen (16, 18; 16′, 18′), von denen mindestens eine Zone (16, 16′) das Austauschermaterial (14) enthält und mit dem

zu entsalzenden Wasser beaufschlagbar ist und mindestens eine andere Zone (18, 18′) mit dem Spülwasser beaufschlagbar ist, wobei der Wasserdurchtritt durch die Austauscherzone (16, 16′) und die Spülwasserzone (18, 18′) unabhängig voneinander absperrbar ist.

13. Vorrichtung nach Anspruch 12, dadurch gekennzeichnet, daß die Zonen (16, 16′; 18, 18′) absperrbare Wasserein- und auslässe (20, 28, 26, 34) aufweisen.

14. Vorrichtung nach Anspruch 12 oder 13, dadurch gekennzeichnet, daß die aus einem elektrisch nichtleitenden Werkstoff bestehende Leitwand (12, 12′, 50) wasserdurchlässige Poren oder Öffnungen aufweist, deren Querschnittsabmessung wesentlich kleiner als ihre Länge ist.

15. Vorrichtung nach einem der Ansprüche 12 bis 14, dadurch gekennzeichnet, daß die Leitwand als feinporiges Filterelement ausgebildet ist.

16. Vorrichtung nach einem der Ansprüche 12 bis 14, dadurch gekennzeichnet, daß die Leitwand als poröse Keramik- oder Glasplatte oder als Wabenplatte ausgebildet ist.

17. Vorrichtung nach einem der Ansprüche 12 bis 16, gekennzeichnet durch ein durch die zylindrisch ausgebildete Leitwand (12) in zwei zueinander konzentrische Zonen (16, 18) unterteiltes Zylinderrohr (10), dessen mit je einem absperrbaren Wassereinlaß (22) und Wasserauslaß (24) versehene zylindrische Innenzone (16) das Austauschermaterial (14) enthält und von einer Stabelektrode (36) axial durchsetzt ist und dessen mit je einem weiteren absperrbaren Wassereinlaß (30) und Wasserauslaß (32) versehene ringförmige Außenzone (18) mit dem Spülwasser beaufschlagbar ist und mit mindestens einer außenwandnahen oder durch die Außenwand gebildeten achsparallelen Elektrode (40) versehen ist.

18. Vorrichtung nach einem der Ansprüche 12 bis 16, gekennzeichnet durch eine durch mindestens eine ebene Leitwand (12, 12′) in verschiedene Zonen (16; 18, 18′) unterteiltes Rechteckrohr.

19. Vorrichtung nach Anspruch 18, dadurch gekennzeichnet, daß die das Austauschermaterial aufnehmende Zone (16) nach zwei Seiten hin über je eine Leitwand (12, 12′) an je eine Spülwasserzone (18, 18′) anschließt und daß in jeder Spülwasserzone (18, 18′) eine Elektrode (40, 40′) im Abstand von der benachbarten Leitwand angeordnet ist.

20. Vorrichtung nach einem der Ansprüche 12 bis 18, dadurch gekennzeichnet, daß zwei durch eine Leitwand (50) voneinander getrennte Austauscherzonen (16, 16′) vorgesehen sind, von denen die eine (16) einen Kationenaustauscher und die andere (16′) einen Anionenaustauscher enthält, daß die Zonen an ihrer Außenseite über je eine weitere Leitwand (12, 12′) an eine mit Spülwasser beaufschlagbare Zone (18, 18′) angrenzen, daß die Spülwasserzonen an ihrer der Leitwand (12, 12′) gegenüberliegenden Seite von je einer der Elektroden (40, 40′) begrenzt sind und daß die parallel durchströmbaren Austauscherzonen (16, 16′) einerseits und die parallel durchströmbaren Spülwasserzonen (18, 18′) andererseits je einen gemeinsamen absperrbaren Ein- und Auslaß (20, 26; 28, 34) aufweisen.

21. Vorrichtung nach einem der Ansprüche 12 bis 19, dadurch gekennzeichnet, daß in einer Austauschersäule mehrere parallel durchströmte und elektrisch parallel geschaltete, aus Ionenaustauscherzonen (16 bzw. 16′) und Spülwasserzonen (18 bzw. 18′) bestehende Elektrolysezellen angeordnet sind (Fig. 4a und 4b).

22. Vorrichtung nach einem der Ansprüche 12 bis 21, dadurch gekennzeichnet, daß die Ionenaustauscher-und Spülwasserauslässe (26 bzw. 34) einer ersten Säule (1) mit den entsprechenden Einlässen (20′ bzw. 28′) einer zweiten Säule (2) verbunden sind, daß eine der Säulen (1) einen Kationenaustauscher und die andere Säule (2) einen Anionenaustauscher enthält und daß die Elektroden in den beiden Säulen (1, 2) während der Regenerationsphase umgekehrt gepolt sind.

23. Vorrichtung nach einem der Ansprüche 12 bis 22, dadurch gekennzeichnet, daß die Elektrode in einer an einen Kationenaustauscher angrenzenden Spülwasserzone (18) als Kathode (40) und in einer an einen Anionenaustauscher angrenzenden Spülwasserzone (18′) als Anode (40′) gepolt ist.

24. Vorrichtung nach einem der Ansprüche 12 bis 23, dadurch gekennzeichnet, daß die Elektroden (36, 40, 40′) und/oder mindestens eine in die Spülwasserzone oder die Austauscherzone eintauchende Hilfselektrode mit einer der Elektrolyse-Gleichspannung überlagerten hochfrequenten Wechselspannung beaufschlagbar sind.

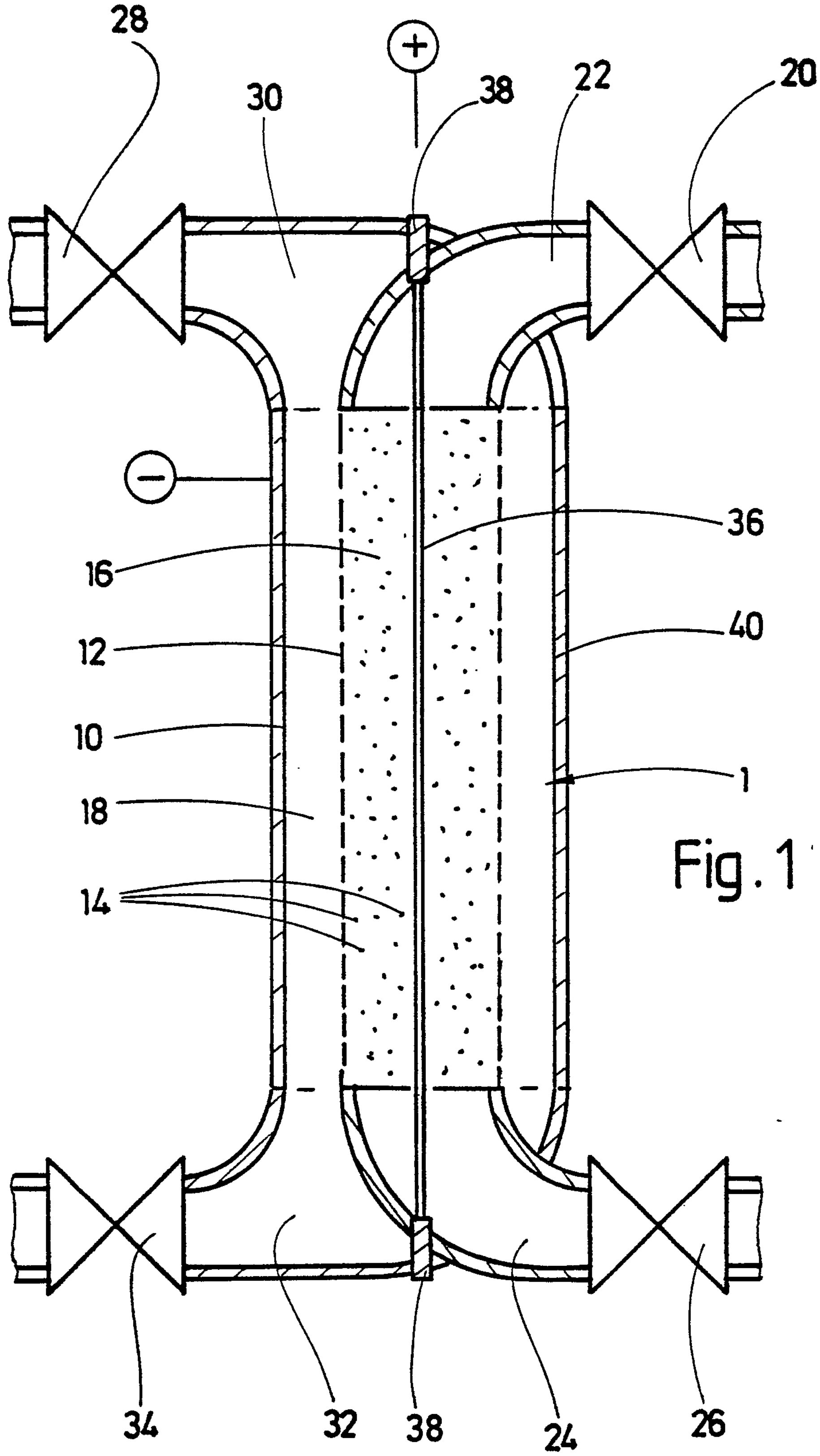


Fig. 1

CILLIT Wassertechnik GmbH & Co 7100 Heilbronn
Patentanwälte Dr.-Ing. Eugen Maier - Dr.-Ing. Eckhard Wolf
Pischekstraße 19 - 7000 Stuttgart 1

A 13 371

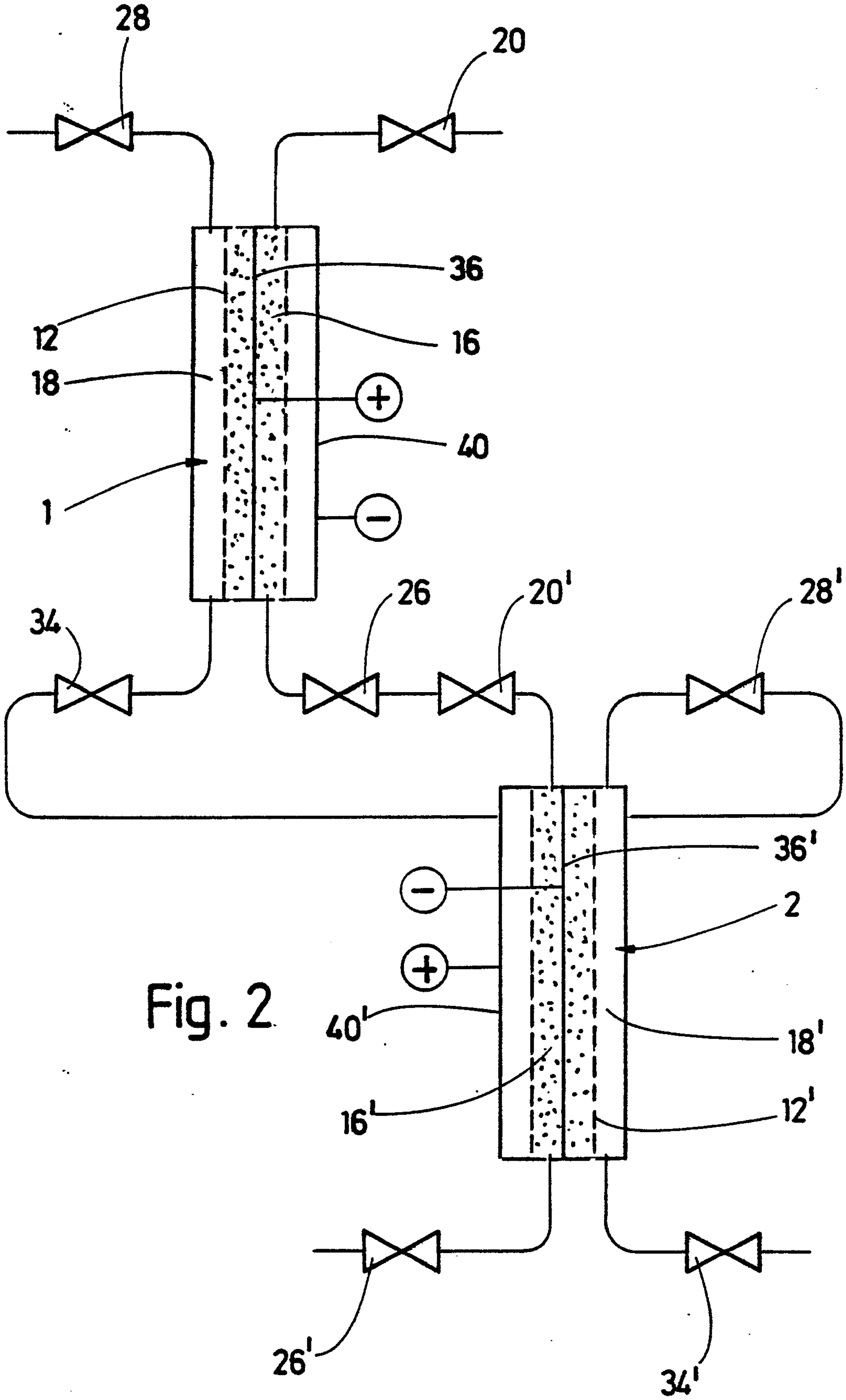


Fig. 2

A 13371

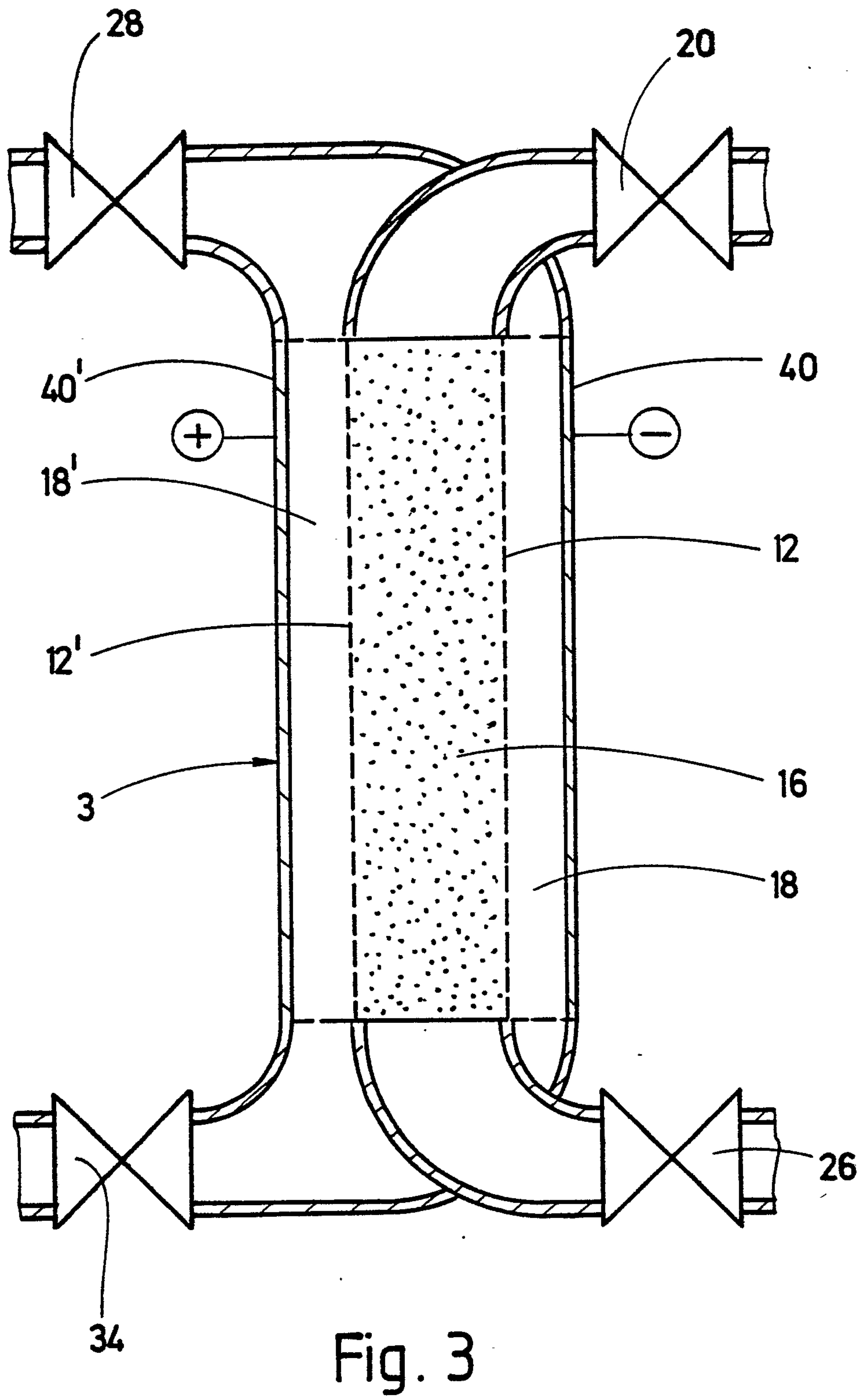


Fig. 3

Fig. 4a

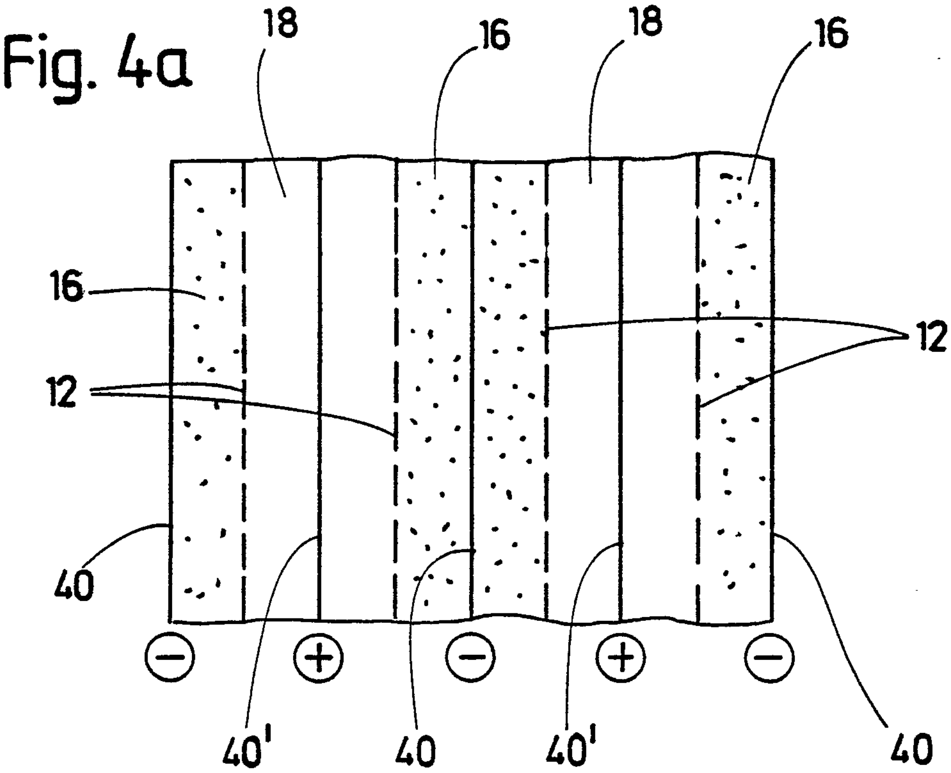


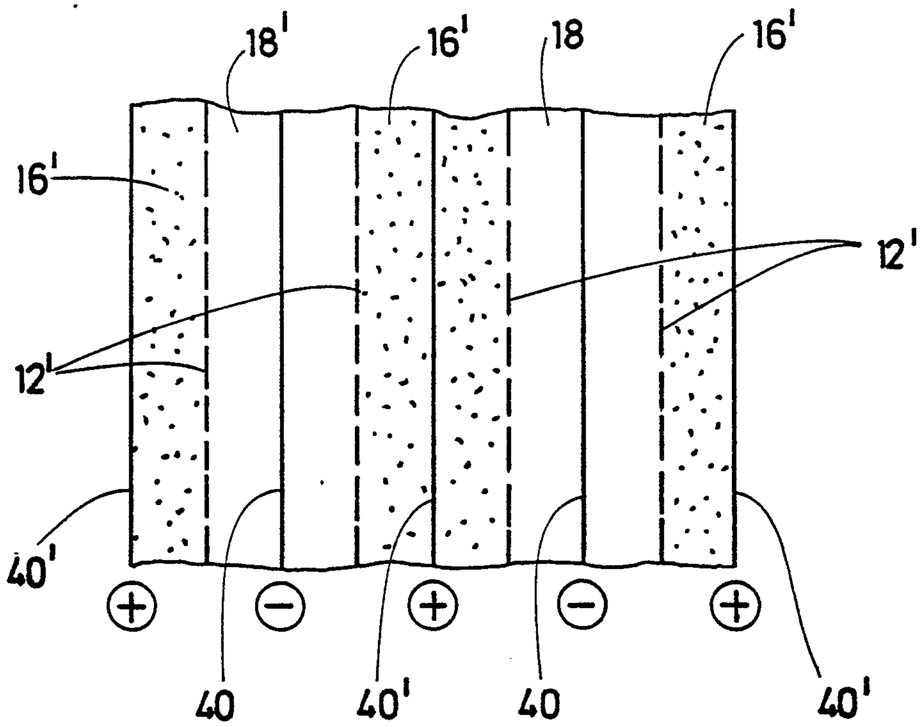


Fig. 4b

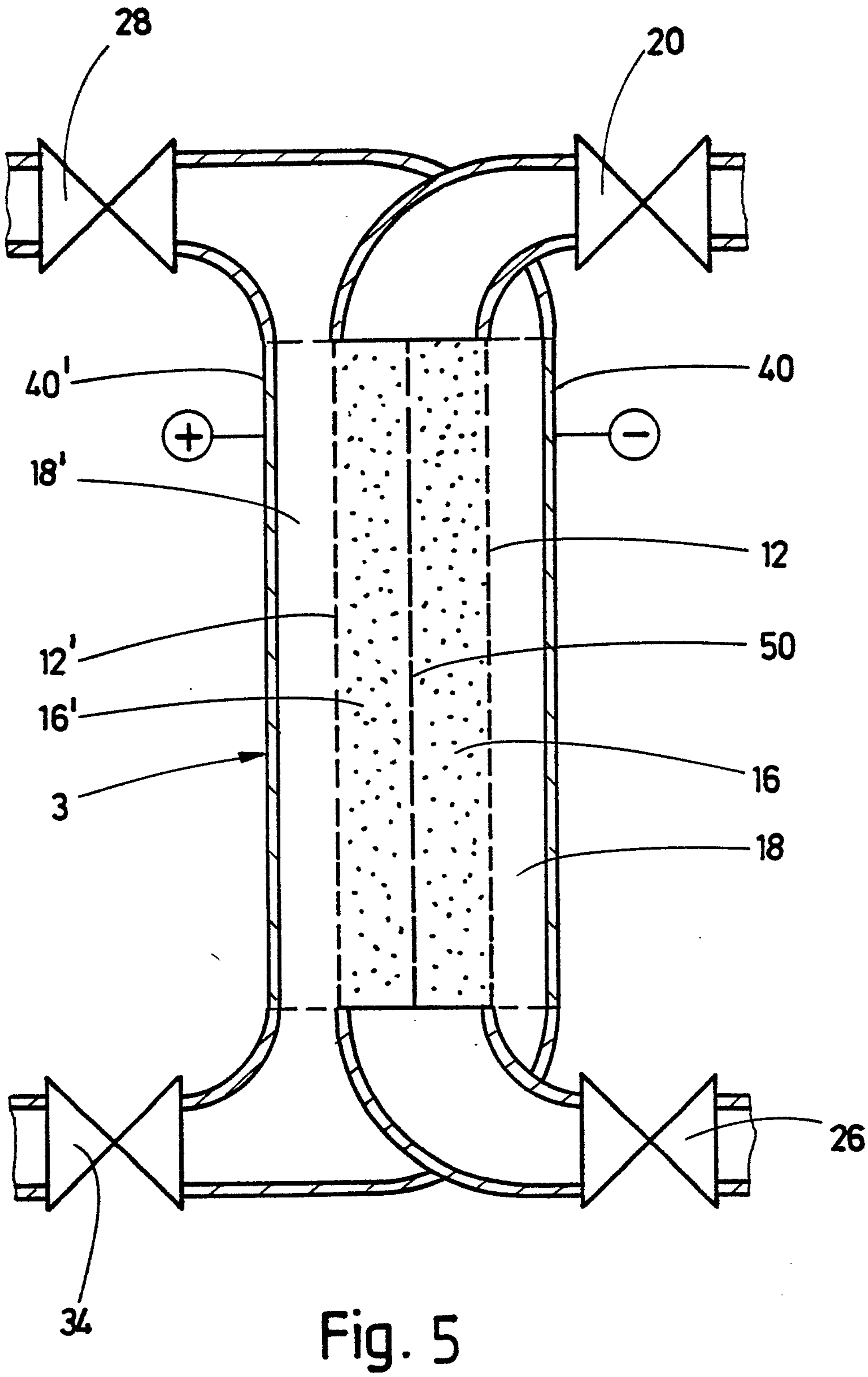


Fig. 5

A 13 371

Europäisches Patentamt

# EUROPÄISCHER RECHERCHENBERICHT

Nummer der Anmeldung

EP 89 10 0211

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 812 300 (PEARSON)<br>* Spalte 2, Zeile 40 - Spalte 5, Zeile 30; Spalte 7, Beispiel 3 * | 1,6,7, 11-13, 15,16, 18,21 | B 01 J 49/00<br>C 02 F 1/42 |
| X | GB-A- 744 059 (CHEMISCHE FABRIK BUDENHEIM)<br>* Seite 1, Zeile 45 - Seite 2, Zeile 109 * | 1-3,5,6 ,12,13, 15-19 | |
| X | DE-C- 919 884 (BASF)<br>* Seite 1, Zeile 24 - Seite 2, Zeile 25 * | 1,6,12, 13,15, 16,18, 19 | |
| X | DE-B-1 054 419 (BASF)<br>* Spalte 1, Zeile 24 - Spalte 2, Zeile 45 * | 1 | |
| A | | 8 | |
| E | WO-A-8 900 453 (GRÜNBECK WASSERAUFBEREITUNG)<br>* Seiten 10-13 * | 1,9,24 | **RECHERCHIERTE SACHGEBIETE (Int. Cl.4)**<br>B 01 J |

Der vorliegende Recherchenbericht wurde für alle Patentansprüche erstellt

| Recherchenort | Abschlußdatum der Recherche | Prüfer |
|---|---|---|
| DEN HAAG | 06-07-1989 | WENDLING J.P. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)